# EUROPEAN PATENT APPLICATION

(11) **EP 0 844 148 A1**
(43) Date of publication of application: **27.05.1998**
(21) Application number: 97309370.1
(22) Date of filing: 20.11.1997
(51) Int. Cl.: B60R 21/26

(54) **Gas heater for high pressure hybrid airbag inflator**

(30) Priority: 20.11.1996 US 752089
(71) Applicant: Autoliv ASP, Inc., Ogden, Utah 84405-1563 (US)
(72) Inventor: Dahl, Kim V., Clinton, Utha 84015 (US); Mossi, Dean G., Roy, Utah 84067 (US)
(74) Representative: Bankes, Stephen Charles Digby

(57) **Abstract**

A gas heater (36) for a high pressure hybrid airbag inflator (10). The inflator includes a main chamber (22) containing a quantity of stored pressurized gas (24). The chamber additionally includes at least one heating device (36) to heat the stored gas. The heating device includes a main body which extends through the housing. The main body has an enlarged section (78) within the housing, and this enlarged section abuts against the housing due to the pressure of the stored gas. This enlarged section thus serves to retain the heater, and to seal the heater to the housing. An initiator (46) is mounted within the heater. Over the face of the heater there is a supported burst disk (60). The inner side (64) of the burst disk is supported against deflection to permit the disk to survive the high pressures within the inflator. The outer (62) side is much less supported, to permit the initiator to more easily rupture the burst disk.

## Description

The present invention relates in general to passive restraint airbag systems. In particular, the present invention relates to an improved gas heater for hybrid inflators for airbag systems, with the heater surviving high pressure stored gas environments.

In airbag systems there is typically a cushion which, upon a collision, is inflated to provide protective cushioning to the passenger. To inflate the cushion, such systems employ an inflator to produce a quantity of inflation gas. Various inflators operating upon different principles are known. For each operating principle, there is a slight difference in performance such as the rise and fall of pressure in the cushion over time. As such, for different applications, inflators operating on different principles are preferred.

One known class of inflator is referred to as hybrid. In hybrid inflators, there is a pressure vessel containing a quantity of pressurized gas. To fill a cushion simply with stored gas would require a large quantity of the gas, resulting in a large pressure vessel. To reduce size and weight, hybrid inflators exploit the principle that the pressure of a gas increases with temperature. Therefore, hybrid inflators include various types of heaters which heat the gas before it is released from the inflator. This permits a lesser quantity of gas to be stored, greatly reducing inflator size.

Even with this size reduction, hybrid inflators have typically been rather large. As such, they have typically been used for passenger-side protection, where relatively large spaces are available behind the vehicle dashboard to store the inflator. Providing a hybrid inflator which is sufficiently small to be mounted to a steering wheel for driver side protection, or to a seat back or vehicle side for side impact protection, has been more difficult.

Additionally, there has been a growing desire to provide adaptive airbag systems. Adaptive systems tailor airbag performance to various criteria, such as ambient temperature (which affects gas pressure as noted above), severity of the collision, position of the passenger, etc. While such adaptive systems are desirable, they typically require additional components on the inflator, increasing its size. As such it has been even more difficult to provide an adaptive hybrid inflator which will meet the size requirements for vehicles, especially for driver side and side impact applications. One solution is shown in U.S. Serial No. 08/629,695 to Buchanan et al., where the housing for the inflator is formed as a sphere. This spherical shape permits higher gas storage pressures, and therefore a smaller overall size. The increased gas storage pressure, however, has created additional problems of its own. Specifically, the high pressure tends to destroy common initiators, making them unsuitable for use as gas heaters. The solution shown in that application was to form a pressure dome over the initiator. However, to prevent collapse of such a dome under the pressure, it must have a predetermined thickness. This thickness will typically exceed that for a proper laser weld, such that the pressure dome is not properly secured to the housing. This can result in the entire pressure dome being ejected from the housing. Further, the dome must rupture upon activation to permit the heat from the initiator to heat the gas. With the increased dome thickness, however, it is difficult to rupture the dome using conventional initiators.

An object of the present invention is to provide an adaptive hybrid inflator which reliably provides gas to a protective cushion.

Another object of the present invention is to provide such an inflator having a small size and high gas pressure, to reduce the space occupied by the inflator in the vehicle cabin.

Yet another object of the present invention is to provide a gas heater for such an inflator which will survive the high gas storage pressure, and reliably deliver heat to the stored gas.

These and other objects are achieved by a gas heater for a high pressure hybrid airbag inflator. The inflator includes a main chamber containing a quantity of stored pressurized gas. The chamber additionally includes at least one heating device to heat the stored gas. The heating device includes a sidewall which extends through the housing. The sidewall has an enlarged section within the housing, and this enlarged section abuts against the housing due to the pressure of the stored gas. This enlarged section thus serves to retain the heater, and to seal the heater to the housing. An initiator is mounted within the heater. Over the face of the heater there is a supported burst disk. The inner side of the burst disk is highly supported to permit the disk to survive the high pressures within the inflator. The outer side is much less supported, to permit the initiator to more easily rupture the burst disk.

The objects and features of the invention noted above are explained in more detail with reference to the drawings, in which like reference numerals denote like elements, and in which:
Fig. 1 is a cross-sectional side view of a first embodiment of an inflator according to the invention;
Fig. 2 is a detail cross-sectional view showing the rupture element of Fig. 1;
Fig. 3 is a cross-sectional side view of a second embodiment of an inflator according to the invention; and
Fig. 4 is a detail cross-sectional view showing the rupture element of Fig. 3.

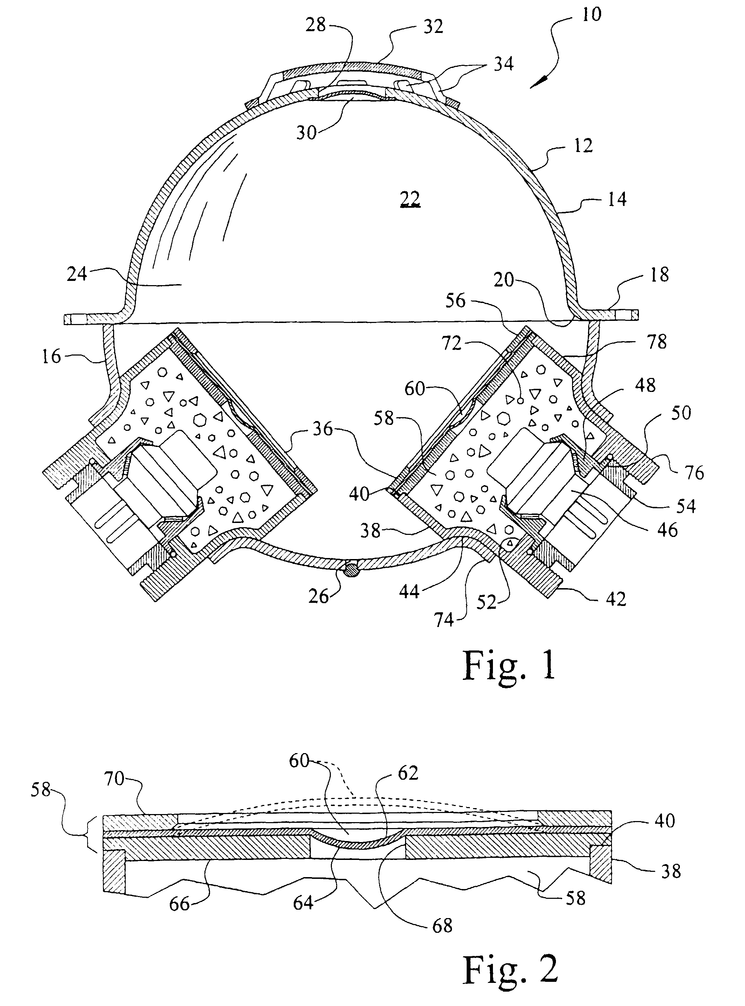

With reference to Fig. 1, a first embodiment of an inflator according to the present invention is generally designated by reference numeral 10.

The inflator 10 preferably takes the general form of a sphere, and includes a housing 12 including an upper hemisphere 14 and a lower hemisphere 16. These hemispheres are secured together, as by welding about their intersection. As shown, one or the other of the hemispheres may include a peripheral mounting flange 18 for securing the inflator to the vehicle. If the mounting flange 18 is formed monolithically with one of the hemispheres, as shown, a curved edge 20 will result. Since it is not possible to securely weld the remaining hemisphere to such a curved surface, the remaining hemisphere may be formed with a larger radius, and actually abut against the mounting flange 18, as shown. This will permit a secure weld to be formed. Forms other than spherical may be employed. However, the spherical form is preferred because, among solid shapes, a sphere has the smallest surface area per volume, reducing the amount of material required to form the housing.

The housing 12 defines an interior or main chamber 22. The chamber 22 contains a quantity of pressurized gas 24. While an inert gas is typically used, other, reactive gasses could be employed in whole or in part. While various gasses may be employed, argon is preferred for reasons discussed more fully below. The housing 12 may be provided with an appropriate fill port 26 extending therethrough, which is sealed upon pressurization of the housing. The storage of pressurized gas is a further reason for the preferred spherical form of the housing. Specifically, the spherical form provides a very strong pressure vessel compared to other shapes, and the spherical housing may therefore accept higher pressures than other forms. As such, a spherical housing may store more of the inert gas compared to other shapes having an equal volume. Since a predetermined quantity of stored gas will be required to inflate a particular cushion, a smaller volume (and therefore a smaller housing) may be used with a spherical housing.

The housing includes an exit orifice 28 extending therethrough which provides communication between the main chamber 22 and a cushion (not shown). Since it is desired to maintain the stored gas in the housing until a collision is sensed, the exit orifice is closed by a burst disc 30. As is known in the art, such burst discs are designed to withstand the pressure of the stored gas under normal circumstances. Upon activation of the inflator 10, however, the pressure within the main chamber will rise, and the burst disc is designed to fail at a predetermined pressure reached after activation. The rupture of the burst disc 30 permits the stored gas to flow through the exit orifice to the cushion. To provide a proper surface for welding the burst disc 30 in position, it may be desirable to form a flat surface about the exit orifice 28, as shown.

While the housing could simply include the exit orifice and burst disc, it is preferred to provide a diffuser 32 to spread the inflation gas. The diffuser will include a plurality of gas exit ports 34 extending therethrough to provide a more diffuse flow of the gas from the inflator. Diffuser designs other than that shown could of course be employed.

Within the main chamber 22 there is at least one heating device 36. A second heating device 36 is preferably provided for adaptive performance, described more fully below. The heating device 36 includes a sidewall 38 having an inner end 40 and an outer end 42. The sidewall 38 is generally tubular and extends through a mounting hole 44 in the housing 12. It is preferred that the sidewall 38 have a circular cross-section when the housing is a sphere, as this simplifies the shape of the mounting holes. The mounting of the heating device within the mounting hole will be discussed more fully below.

An initiator (or squib) 46 closes the outer end 42. As is known in the art, the initiator 46 includes appropriate electrical connectors to communicate with a control circuit (not shown). Upon receipt of a signal the initiator 46 will produce a brief flash of heat, and possibly a small quantity of gas. The initiator 46 may be mounted to the outer end 42 in various ways. In the embodiment shown, the initiator 46 is secured to a holder 48, such as by crimping of the holder. This holder is received within the outer end 42 in fixed position, such as by providing an enlarged diameter shoulder 50 on the holder 48, and a reduced diameter neck 52 in the sidewall 38. The shoulder 50 would then abut against the neck 52 to place the holder 48 and initiator 46 in proper position. To secure the holder 48 in this position, the outer end 42 may include interior threads, and a plug 54 having mating threads may be inserted into the outer end 42 to clamp the shoulder 50 between the neck 52 and plug 54. If desired, an appropriate seal, such as an O-ring, may be placed in this area, such as at the outer diameter of the shoulder 50 as shown, to provide a seal against flow of gas out the outer end 42.

The initiators which are typically used in airbag inflators would not withstand the pressures intended to be used within the housing 12. To protect the initiator 46 from these pressures (and thus permit standard initiators to be used), the heating device 36 includes a rupture element 56 sealing the inner end 40 of sidewall 38. The rupture element 56, sidewall 38 and initiator 46 serve to define a heater interior 58. As may be envisioned, this interior will be separated from the high pressure within the main chamber 22, and thus the initiator 46 is protected from this pressure.

The pressure within the heater interior 58 may be atmospheric. For example, the seal formed at the outer end 42 may be only partial, so that over time leaking permits the heater interior 58 to attain atmospheric pressure. Alternatively, the seal at the outer end 42 may be complete, and the pressure within the heater interior 58 will be the atmospheric pressure at which the heating device 36 was assembled. If desired, however, the heater interior 58 may be pressurized, although to a point which will not endanger the initiator 46. This may be achieved by assembling the heating device 36 in an elevated pressure environment, or by providing a fill hole (not shown) and pressurizing the heater interior 58 after assembly.

Continuing on, the rupture element may take various forms known in the art. However, to accommodate the desired high pressures, the rupture element 56 preferably takes a specific form. In particular, the rupture element 56 includes a burst disc 60. As is known in the art, the burst disc 60 will remain intact below a predetermined pressure. However, when the initiator 46 is activated, the heat generated (along with any additional gas created) will increase the pressure within the heater interior 58 above the predetermined pressure, and will rupture the burst disc 60. This will permit the heat tc rapidly escape the heating device 36 to increase the temperature (and therefore the pressure) of the pressurized gas 24.

The use of only a burst disc, however, is subject to the same problems associated with the prior art. Specifically, to reliably avoid premature rupture, the burst disc 60 would have to be designed to withstand a pressure greater than that within the main chamber 22. As such, to rupture the burst disc 60, the initiator 46 would have to generate a pressure much greater than that in the main chamber 22. Generating such high pressures can be difficult.

To avoid this problem, the present invention provides a partially supported burst disc. Specifically, the burst disc 60 includes an outer surface 62 (Fig. 2) facing the main chamber 22, and an inner surface 64 facing the heater interior 58. This inner surface 64 is partially supported. More particularly, a rigid support member 66 extends partially across the inner end 40 at the inner surface of the burst disc 60. In the embodiment shown, this support member 66 is annular (similar to a washer) with an inner opening 68. Other shapes could be employed. For example the support member 66 could have numerous smaller opening spread across its surface, or could have a central area with numerous arms extending radially outward. The burst disc 60 is secured to this support member 66 only along the periphery of the burst disc 60.

As may be envisioned, the support member 66 serves to support the burst disc 60 against the pressure within the main chamber 22 by preventing (or reducing) deflection of the burst disc 60 in one direction (i.e., toward the heater interior 58). This is illustrated in solid line in Fig. 2, where only the unsupported portion of burst disc 60 is deflected (i.e., domed) due to the gas pressure. However, the support member 66 does not support the burst disc 60 against deflection in the opposite direction (i.e., toward the main chamber 22). This is illustrated in dashed line in Fig. 2, showing the burst disc 60 at its maximum deformation just prior to rupture . As such, the burst disc 60 can be designed to rupture at a lower pressure, and at a pressure below that of the pressurized gas 24.

This principle of partial support of the burst disc 60 can also be employed on the outer surface 62 of the burst disc 60. Specifically, a burst retainer 70 may be positioned in partial covering relationship to the outer surface 62 of the burst disc 60. As with the support member 66, the burst retainer 70 will partially support the burst disc 60 against the pressure developed within the heating device 36. This may be used to vary the performance of the heating device 36. As with the support member 66, the burst retainer 70 may take various forms, with an annular shape being shown. It is noted that the burst retainer 70 will typically provide much less support for the burst disc 60 than that provided by the support member 66.

As may be seen from the above description, the heater interior 58 will be isolated from the pressure within the main chamber 22, protecting the initiator 46. However, upon activation of the initiator 46 the pressure rise within the heater interior 58 will cause the burst disc 60 to rupture to expel the heat from the heating device 36 into the main chamber 22 to heat, and thus further increase the pressure of, the pressurized gas 24. In this regard, it is noted that the heater interior 58 may be empty, or could be filled with a quantity of ignition material 72. This ignition material would be ignited by the initiator 46, and would combust, (or decompose, etc.) To produce additional heat, and possibly additional gas. Known powdered or granular ignition materials are preferred, although gasses or liquids could also be employed.

As described, the heating device 36 will provide the desired performance while withstanding the high pressure within the main chamber 22. This high pressure may also cause difficulties in mounting the heating device 36. There is of course a desire to prevent the pressurized gas 24 from leaking out between the heating device 36 and mounting hole 44. However, for highly pressurized inflators, there is the additional problem of the pressure forcing the heating device 36 out of the mounting hole 44. A solution to this problem is a further aspect of the present invention.

As shown, the mounting hole 44 is not simply an opening formed through the housing 12. Rather, the mounting hole 44 includes a skirt 74 extending outward from the periphery of the mounting hole 44. Further, the sidewall 38 of the heating device 36 is not of a constant peripheral length, but includes a tail section 76 adjacent the outer end 42 and an enlarged head 78 adjacent the inner end 40. The mounting hole 44 (and skirt 74) have a size and shape (in this embodiment, a diameter) which closely receives the tail section 76. As such, the enlarged head 78 abuts against the inner face of the housing 12 about the mounting hole 44, as shown in Fig. 1. As shown, the entire length of the sidewall 38 from the inner end 40 to the tail section is enlarged. It should be apparent that only a portion directly adjacent the tail section 76 need be enlarged to abut against the housing, and that the inner end per se need not be enlarged. This arrangement is encompassed within the term "enlarged head".

With the use of the enlarged head, the force tending to push the heating device 36 out of the inflator is resisted by the housing 12 itself, without the need for any type of weld of other securement. A weld is of course employed between the free edge of the skirt 74 and the heating device 36 (specifically the tail section 76), but this weld is simply to prevent leakage of the pressurized gas 24. As such, the strength of this weld need not be nearly so robust.

As a further modification, the abutment of the enlarged head 78 against the housing 12 may be used to assist in preventing leakage. Specifically, the transition between the mounting hole 44 and skirt 74 may be formed with a smooth radius, as shown, and the transition between the enlarged head 78 and tail section 76 may be provided with a mating radius. The close fit between these radii, together with the pressure forcing these radii together, will thus tend to fully close the mounting hole 44 and aid in preventing leaks. A weld as described above is of course still preferred, but again the strength, and importance, of the weld may be reduced.

The arrangement described above is suitable for providing a hybrid inflator having a high pressure-reduced volume housing. As noted, a spherical housing is preferred to achieve these high pressures. Also as noted above, this general arrangement may be modified to provide an adaptive inflator. Adaptive inflators provide different levels of performance based upon the particular events in a collision. For example, if the collision is minor, or if the occupant is seated well forward in the seat, is of less-than-average weight, etc., the cushion would be inflated to a "soft" level. However, for a severe collision, or a heavy occupant, the cushion could be inflated to a "hard" level to provide additional protection.

The inflator 10 may be modified for adaptive performance by providing two or more of the heating devices 36. For such an arrangement the housing will simply include one or more additional mounting holes 44 and associated heating devices 36. In the embodiment shown, two heating devices 36 are provided, both of the same size and design. As such, each of the heating devices will provide essentially identical heat output. Alternatively, the heat output of the devices may be different, with one of the heating devices having a larger heat output. The controller (not shown) to which the heating devices are connected will send appropriate signals to activate one, or both, of the heating devices upon sensing a collision. If both heating devices are activated, the activation may be simultaneous, or at various time delays.

As may be envisioned, the firing of the heating device(s) will heat the stored gas within the main chamber, and, depending upon the type of heating device used, may also increase the amount of inflation gas by the amount of gas produced by the heating device(s). As is known from physics, the pressure of a gas within a volume increases with temperature. As such, increasing the temperature of the stored gas increases its pressure. When the pressure has reached the predetermined value, the burst disc 30 ruptures. The heated gas then flows through the exit orifice to enter the cushion (not shown). The cushion receives this gas and is inflated to a cushion pressure which is sufficient to protect the vehicle occupant. The heated gas also heats the cushion.

This basic process occurs if a single one of the heating devices is activated, or if both heating devices are activated simultaneously. The only difference in operation is that the temperature of the gas, and therefore the pressure, are higher if both devices are activated. The main differences occur when both heating devices are activated, but with a time delay between activations, such that the later-activated heating device is activated after rupture of the burst disc 30.

For this operating mode, computer simulation/modeling has indicated that this is a viable alternative. Specifically, there were serious initial concerns that the gas produced by the later-activated heating device would be so hot that it would burn the cushion. This is because the pressurized gas 24 absorbs the heat from the first-fired heating device 36, bursts the disc 30, and exits the inflator. The heat from the second-fired heating device 36, however, does not have this quantity of pressurized gas 24 within the inflator to absorb its heat. This initially caused concerns that the remaining gas exiting the inflator would be extremely hot, and would burn the portions of the cushion adjacent the diffuser. This does not appear to be the case, however. Specifically it appears that the gas which has inflated the cushion will still accept, or quench, the heat produced by the later heating device 36, and provide adequate operation.

It is noted in this regard that the amount of quenching provided by the gas is related to its molecular weight. As such, it is desired that the stored inert gas have a relatively high molecular weight. A suitable gas is argon, which is known for use as the stored inert gas.

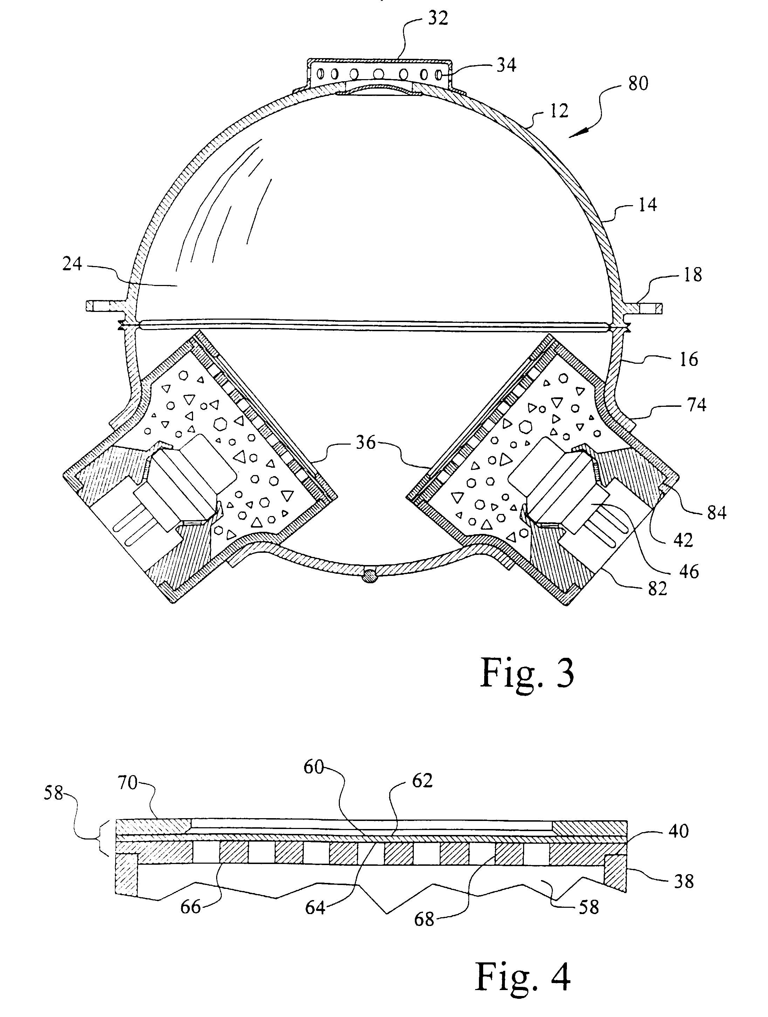

Further modifications may of course be made to this basic inflator arrangement. Some possible modifications are illustrated in Figs. 3 and 4, where a second embodiment of a hybrid inflator according to the present invention is generally designated by reference numeral 80. This embodiment has numerous elements common to the first embodiment, and these elements are designated by like reference numerals. In view of these similarities, only the differences in this second embodiment will be discussed.

A first difference in this embodiment is the construction of the housing, and in particular the construction and joining of the two hemispheres 14 and 16. In this embodiment the mounting flange 18 is spaced from the edge of its associated hemisphere (in this case upper hemisphere 14). As such, the curved edge 20 of the first embodiment is not present. This permits the two edges of the upper hemisphere 14 and lower hemisphere 16 to be joined together directly, such as by an inertia welding step. This has several advantages.

First, the inertial welding technique is a fast, low cost operation, and as such reduces cost compared to other welding techniques. Second, inertia welding provides a very reliable weld. This is of course important if high pressure gas is stored in the housing. Third, by permitting the edges of the hemispheres to be joined, a truly spherical, or at least a near-spherical housing may be formed. This is best illustrated by comparison of Figs. 1 and 3, where it may be see that the housing of Fig. 3 is very nearly a perfect sphere. This is important because the shape of the housing determines the strength of the housing. The housing of Fig. 3 is appreciably stronger than that shown in Fig. 1 since it does not include the discontinuities in the spherical form caused by curved edge 20. The stronger housing of Fig. 3 may therefore accept a higher pressure. Since a predetermined quantity of pressurized gas 24 is stored in the housing, the embodiment of Fig. 3 may be formed smaller than that of Fig. 1.

The housing configuration of Fig. 3 does have drawbacks, however. Specifically, it is more difficult to produce the hemisphere containing the mounting flange 18. Specifically, the curvature of this hemisphere will cause overhang which would interfere with parting of mold halves, stamping dies, etc., which would be used to form the hemisphere. Forming the exterior face, between the mounting flange 18 and the edge of the hemisphere with a cylindrical, rather than spherical, shape may avoid these problems. The problem will of course vary depending upon whether each hemisphere is exactly 180°, or if one is more than 180° and the other less. While a more costly method (such as forging) may be required to form this hemisphere, the savings from inertia welding, increased reliability of the joining weld, and the reduced size of the housing will typically offset the increased cost.

A second difference in this embodiment is the mounting of the initiator 46 in the heating device 36. In this embodiment the initiator 46 is received within a mounting holder 82, generally similar to holder 48 of the first embodiment, but with greater length. Further, the mounting holder 82 may include a peripheral groove 84 at its outer end, forming a shoulder. To secure the mounting holder 82 in position, the sidewall 38 is not threaded, but the outer end 42 is crimped over the end of the mounting holder 82. The crimped end may be received in the groove 84, if it is provided. As may be seen, this arrangement will securely retain the holder in position using fewer parts, thus reducing cost. Additionally, not only do the fewer parts result in fewer assembly steps, but the crimping step is much simpler than the threaded engagement of the first embodiment.

Another difference in this embodiment is the form of the support member 66. As best shown in Fig. 4, a plurality of apertures are provided through this member, rather than a single aperture. This modification was, of course, discussed above. Finally, the diffuser 32 of this embodiment has a slightly different form, with a more cylindrical appearance and the gas exit ports 34 extending only radially. The gas flow from this diffuser will therefore have a slightly different form.

From the above description it can bee seen that the present invention provides an adaptive hybrid inflator which may have a wide range of performance due to the activation of the later heating device after rupture of the burst disc. Further, the inflator is simple in construction, providing a single exit orifice, fill port 26, etc. to reduce cost and weight. In addition to these advantages, the inflator may be sized sufficiently small to permit installation in a steering wheel for protection of a vehicle driver. Specifically, the spherical shape of the inflator distributes stress evenly, permitting this spherical inflator to contain the stored gas at higher pressure compared to other shapes. Since the gas may be at higher pressure, the inflator may be smaller, and in particular small enough to mount to the steering wheel, yet still contain the proper amount of gas.

It is noted that this spherical inflator housing does have a substantial height compared to most steering wheel mounted inflators. However, this height is only realized at the center, and rapidly lessens with radial distance outward. Further, the reduction in size permitted by the increased pressure limit allows the inflator to be mounted offset from the armature of the steering wheel (i.e., the steering wheel rotation axis). This typically permits the inflator to be mounted "deeper" in the steering wheel (i.e., further from the driver), thus reducing the amount which the inflator extends toward the driver.

## Claims

1. A hybrid airbag inflator (10), comprising:
a housing (12) defining a main chamber (22), said housing having an exit (28) extending therethrough to communicate with said main chamber;
a quantity of pressurized gas (24) contained within said main chamber;
a mounting hole (44) extending through said housing to communicate with said main chamber; and
a gas heater (36) operatively associated with said main chamber, said gas heater including a sidewall (38) having an inner end (40) and an outer end (42), said sidewall having a tail section (76) adjacent said outer end, said tail section having a size and shape closely received within said mounting hole, and said sidewall including an enlarged head (78) adjacent said inner end, said enlarged head abutting against said housing and assisting in retaining said gas heater to said housing.

2. An inflator as claimed in claim 1, wherein said mounting hole (44) further includes a skirt (74) extending outward therefrom, said skirt closely receiving at least a portion of said tail section (76) of said gas heater (36).

3. An inflator as claimed in claim 2, further including a smooth radius transition between said mounting hole (44) and said skirt (74), and a mating smooth radius transition between said enlarged head (78) and said tail section (76).

4. An inflator as claimed in any preceding claim wherein said gas heater further includes:
an initiator (46) mounted within said sidewall (38) and closing said outer end;
a rupture element (56) mounted to said inner end (40), said rupture element including a burst disc (60) and a support member (66), said support member being located intermediate said initiator and said burst disc and preventing at least some deflection of said burst disc when said burst disc is subjected to pressure, said support member having at least one opening (68) extending therethrough in communication with said burst disc.

5. An inflator as claimed in claim 4, wherein said opening (68) is centrally located, and said burst disc (60) is secured to said support member (66) about the periphery of said burst disc and in surrounding relation to said opening.

6. An inflator as claimed in claim 4 or claim 5, wherein said sidewall (38), initiator (46) and support member (66) define a heater interior (58), and further including a quantity of ignition material (72) received in said heater interior.

7. An inflator as claimed in any one of claims 4 to 6, wherein said rupture element (56) further includes a burst retainer (70) mounted to said burst disc (60), with said burst disc intermediate said support member (66) and said burst retainer, said burst retainer having a central opening encompassing said at least one opening (68) in said support member.

8. A gas heater (36) for a high pressure airbag inflator, said gas heater including a sidewall (38) having an inner end (40) and an outer end (42), said sidewall having a tail section (76) adjacent said outer end and an enlarged head (78) adjacent said inner end, the enlarged head having a diameter greater than that of the tail section, an initiator (46) being mounted within said said side wall and closing said outer end and a rupture element (56) being mounted to said inner end, said rupture element including a burst disc (60) and a support member (66), said support member being located intermediate said initiator and said burst disc and preventing at least some deflection of said burst disc when the latter is subjected to pressure from outside said heater, said support member having at least one opening (68) extending therethrough in communication with said burst disc.
